# EUROPÄISCHE PATENTSCHRIFT

(11) **EP 1 897 699 B1**
(45) Veröffentlichungstag und Bekanntmachung des Hinweises auf die Patenterteilung: **30.04.2014**
(21) Anmeldenummer: 07010434.4
(22) Anmeldetag: 25.05.2007
(51) Int. Cl.: B44C 1/22, B23K 26/00, B29C 47/00

(54) **Verfahren sowie Vorrichtung zur Herstellung eines Polyethylen-Gegenstands mit einer maschinenlesbar codierten Informationsmarkierung**
Method and device for manufacturing a polyethylene object marked with a machine readable code
Procédé et dispositif destinés à la fabrication d'objets en polyéthylène dotés d'une marque d'informations codées lisibles par une machine

(30) Priorität: 07.06.2006 DE 102006026790
(43) Veröffentlichungstag der Anmeldung: 12.03.2008
(73) Patentinhaber: REHAU AG + Co, 95111 Rehau (DE)
(72) Erfinder: Stadthalter, Peter, 96152 Burghaslach (DE); Riedel, Harald, 95194 Regnitzlosau (DE)

(56) Entgegenhaltungen:
- EP-A1- 0 710 570
- EP-A2- 0 415 674
- WO-A2-02/42371
- WO-A2-02/074548
- GB-A- 2 421 221
- US-A- 6 017 972

## Beschreibung

Die Erfindung betrifft ein Verfahren sowie eine Vorrichtung zur Herstellung eines Polyethylen-(PE)-Gegenstands mit einer maschinenlesbar codierten Informationsmarkierung.

Ein derartiges Verfahren sowie eine Vorrichtung hierzu sind durch offenkundige Vorbenutzung bekannt. Hierbei werden auf den Gegenstand Etikettenaufkleber aufgebracht, die die Informationsmarkierung oder -signierung tragen. Dieses Verfahren hat als Hauptnachteil die geringe Haltbarkeit der Etiketten auf dem Rohr. Ein weiterer Nachteil ist, dass auch die Signierung selbst auf den Etiketten oftmals nicht ausreichend haftet.

Aus der EP 0 415 674 A2 ist ein Artikel mit darauf befindlichen Markierungen und ein Verfahren zur Herstellung des Artikels bekannt, wobei bei dem Verfahren die Markierungen mittels eines Lasers ausgebildet werden.

Es ist daher eine Aufgabe der vorliegenden Erfindung, ein Verfahren der eingangs genannten Art sowie eine Vorrichtung hierfür derart weiterzubilden, dass ein dauerhaftes und möglichst unaufwändiges Aufbringen der Informationsmarkierung auf den Gegenstand gewährleistet ist.

Diese Aufgabe ist, was das Verfahren angeht, erfindungsgemäß gelöst durch ein Verfahren mit den im Anspruch 1 angegebenen Merkmalen.

Überraschend hat sich herausgestellt, dass auch PE-Gegenstände einer Lasermarkierung zugänglich sind. Dies war bisher nicht in Betracht gezogen worden, da PE für die Wellenlängen der typischen Markierlaser, die insbesondere im Bereich von 1 µm liegen, im Wesentlichen transparent ist. Es findet daher im Polyethylen kaum eine Wechselwirkung des Materials mit der Laserstrahlung statt, so dass nicht zu erwarten war, dass eine Lasermarkierung bzw. -signierung von Polyethylen möglich ist. Erfindungsgemäß wurde erkannt, dass eine Lasermarkierung von Polyethylen möglich ist, wenn eine Laserstrahlquelle sehr hoher mittlerer Leistung eingesetzt wird. Eine Laserstrahlquelle mit einer mittleren Leistung von mindestens 10 W, insbesondere mit einer mittleren Leistung von mehr als 50 W hat sich als für das Markieren von Polyethylen geeignet herausgestellt.

Dadurch, dass als Markiervorschub zumindest teilweise der Extrusionsvorschub genutzt wird, kann das Markieren des Gegenstands effizient in den Herstellprozess des Gegenstandes integriert werden. Neben der codierten Informationsmarkierung kann online auch Klartext mittels Lasermarkieren aufgebracht werden. Die Informationsmarkierung, bei der es sich z. B. um einen Barcode oder um einen zweidimensionalen Data-Matrix-Code handeln kann, lässt sich sehr gut haltbar auf den Gegenstand aufbringen. Ein Wechsel der Art der aufgebrachten Informationsmarkierung ist durch entsprechendes Ändern der Markier-Ansteuerdaten einfach möglich.

Eine Vorschubüberlagerung nach den Ansprüchen 2 bis 4 schafft die Möglichkeit, Schwankungen im Extrusionsvorschub auszugleichen. Der Ablenkvorschub kann insbesondere so viel schneller sein als der Extrusionsvorschub, dass es auf Schwankungen im Extrusionsvorschub überhaupt nicht mehr ankommt. Der Extrusionsvorschub wird dann hauptsächlich dazu genutzt, Abstände zwischen den längs des Gegenstands aufgebrachten Informationsmarkierungen zu schaffen. Je nach den Anforderungen an den Laseraufbau und an die Bündelführung hat sich das Erzeugen des Ablenkvorschubs durch einen Ablenkspiegel und/oder eine Bündelformungslinse als vorteilhaft herausgestellt.

Eine Vorschubüberlagerung nach Anspruch 5 ermöglicht auch das Aufbringen von Informationsmarkierungen, bei denen das Markieren auf kleinem Raum relativ viel Zeit erfordert. Eine Beschichtung nach Anspruch 6 verringert die Anforderungen, die an die Leistungsfähigkeit der Laserstrahlquelle zur Erzeugung der Markierung auf dem Polyethylen-Gegenstand gestellt werden. Die Informationsmarkierung wird auf der Beschichtung erzeugt, wo die Laserstrahlung für einen definierten Farbumschlag sorgt. Da die Beschichtung sensitiv auf die Laserstrahlung mit einem Farbumschlag reagiert, ist nur ein geringer Energiebedarf beim Laser erforderlich. Zudem sind hohe Markiergeschwindigkeiten realisierbar. Die Beschichtung kann insbesondere so ausgelegt sein, dass sie eine hohe Absorption für die Wellenlänge der Laserstrahlung hat. Es resultiert eine geringe Eindringtiefe der Laserstrahlung in der Beschichtung, so dass das Gegenstandsmaterial unter der Beschichtung von Laserstrahlung praktisch nicht durchdrungen wird, so dass eine Schädigung des sonstigen Gegenstandsmaterials durch die Laserstrahlung ausgeschlossen ist. Die hohe Farbumschlagssensitivität ermöglicht die Erzeugung von Markierungen mit hohem Kontrast. Die Markierung ist daher sowohl für ein Benutzerauge als auch für eine Lesemaschine, z. B. einen Scanner, gut lesbar.

Da wenig Energie in die Beschichtung eingetragen werden muss, um den Farbumschlag zu erzeugen, kann die von der Laserstrahlung beaufschlagte Oberfläche der Beschichtung glatt bleiben.

Beschichtungs-Längsstreifen nach Anspruch 7 können so ausgestaltet sein, dass ihr relativer Anteil am Volumen des gesamten Gegenstands vernachlässigbar gering ist. Derartige Beschichtungen können auch dort eingesetzt werden, wo es sensibel auf die Materialzusammensetzung des Gegenstands ankommt, z. B. bei Gasrohren, Trinkwasserrohren, Druckentwässerungen oder bei Fernwärmeleitungen. Alternativ kann auch eine die zu markierende Gegenstandsoberfläche vollständig abdeckende Beschichtung eingesetzt werden. Die Beschichtungs-Längsstreifen eignen sich zudem gut als optische Produktkennzeichnung. Die Längsstreifen können dabei so auf den Gegenstand aufgebracht sein, dass mindestens ein Längsstreifen sichtbar ist, unabhängig davon, aus welcher Richtung der Gegenstand betrachtet wird.

Eine Erfassung nach Anspruch 8 erleichtert das Markieren bei Einsatz einer Längsstreifen-Beschichtung, da auf ein spezielles Ausrichten des Rohrs zum Laser verzichtet werden kann. Es wird vielmehr der Laser zum Rohr ausgerichtet.

Eine Fokalebenen-Nachstellung nach Anspruch 9 gewährleistet eine definierte Bündelung der Laserstrahlung auf die zu markierende Gegenstandsobenfläche.

Die eingangs genannte Aufgabe ist, was die Vorrichtung angeht, gelöst durch eine Herstellungsvorrichtung mit den im Anspruch 10 angegebenen Merkmalen.

Die Vorteile der Herstellungsvorrichtung entsprechen denen, die vorstehend im Zusammenhang mit dem Herstellungsverfahren schon diskutiert wurden.

Eine Zeilenkamera nach Anspruch 17 gewährleistet eine sichere und hochgenaue Erfassung des Beschichtungs-Längsstreifens. Alternativ kann auch eine Digitalkamera, eine Flächenkamera oder ein anderer Typ eines Sensors zum Einsatz kommen.

Ein Ausführungsbeispiel der Erfindung wird nachfolgend anhand der Zeichnung näher erläutert. In dieser zeigen:
- Fig. 1: schematisch eine Vorrichtung zur Herstellung eines Polyethylen-Gegenstands mit einer maschinenlesbar markierten Informationsmarkierung;
- Fig. 2: schematisch aber stärker im Detail eine Laserstrahlmarkiereinrichtung der Herstellungsvorrichtung nach Fig. 1 beim Markieren des Gegenstands; und
- Fig. 3: einen Querschnitt durch einen alternativen Gegenstand mit einer farbumschlagssensitiven Beschichtung in Form mehrerer Längsstreifen.

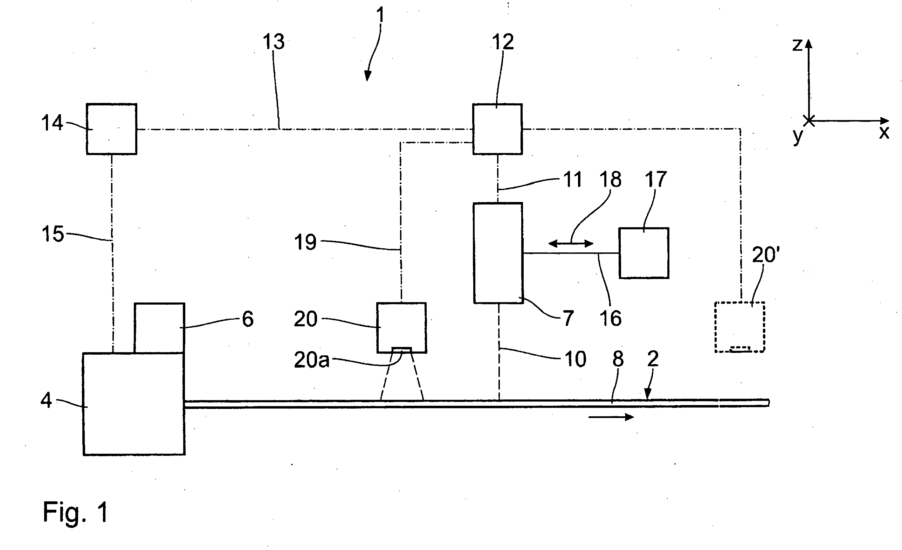

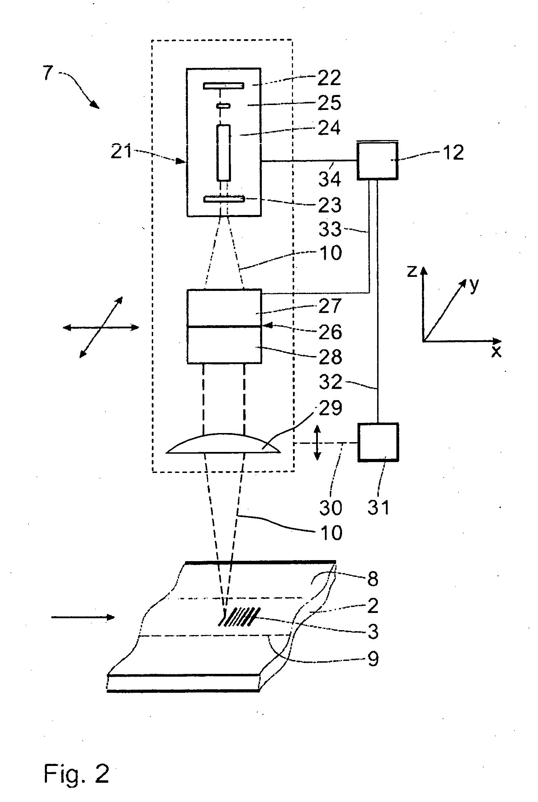

Eine Vorrichtung 1 zur Herstellung eines Polyethylen-(PE)-Gegenstands 2 mit einer maschinenlesbar codierten Informationsmarkierung 3 ist schematisch mit ihren Hauptkomponenten in der Fig. 1 dargestellt. Ein Beispiel für die Informationsmarkierung 3, nämlich einen Barcode, zeigt die Fig. 2, auf die später noch eingegangen wird. Alternativ zu einem Barcode sind auch andere maschinenlesbar codierte Informationsmarkierungen mit der Vorrichtung 1 herstellbar, z. B. ein zweidimensionaler Data-Matrix-Code.

Bei dem Gegenstand 2 handelt es sich um ein Gasrohr aus dem Material PE 80. Auch andere Gegenstände 2 sind möglich, beispielsweise die Materialien PE 100 oder PE-X, insbesondere PE-Xa, d. h. peroxidisch vernetztes PE. Es können auch Gegenstände für andere Anwendungen hergestellt werden, z. B. Trinkwasserrohre, Rohre zur Druckentwässerung oder Fernwärmerohre. Auch die Herstellung von nicht rohrförmigen Gegenständen 2, z. B. von Platten, ist möglich.

Der Barcode 3 trägt als Informationsinhalt den Hersteller des Gegenstandes 2, das Material des Gegenstandes 2, die Norm oder die Normen, die vom Gegenstand 2 erfüllt werden, Dimensionsdaten zum Gegenstand 2, Produktionsdaten zum Gegenstand 2, insbesondere Daten, welche Rückschlüsse auf die individuelle Herstellungsvorrichtung 1 zulassen, sowie das Produktionsdatum und den laufenden Produktionsmeter des Gegenstands 2.

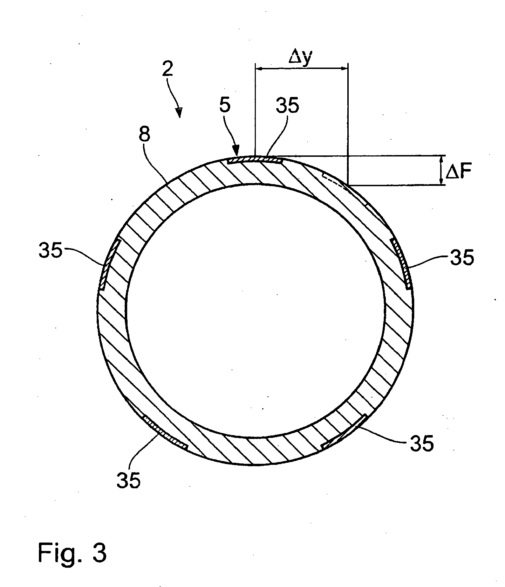

Die Vorrichtung 1 hat einen Extruder 4 zum Extrudieren des Gegenstands 2. Zum Aufbringen einer noch zu beschreibenden Beschichtung 5 (vgl. Fig. 3) durch Koextrusion hat der Extruder 4 eine schematisch angedeutete Beschichtungseinrichtung 6.

Zur Erzeugung der Informationsmarkierung 3 auf dem Gegenstand 2 hat die Vorrichtung 1 eine Lasermarkiervorrichtung 7. Letztere beaufschlagt eine zu markierende Gegenstandsoberfläche 8 innerhalb eines Markierfeldes 9 (vgl. Fig. 2) mit gebündelter Laserstrahlung 10. Das Markierfeld 9 hat eine Breite im Bereich einiger 10 mm. Über eine Signalleitung 11 steht die Lasermarkiervorrichtung 7 mit einer Markiersteuereinrichtung 12 in Signalverbindung. Über eine Signalleitung 13 steht die Markiersteuereinrichtung 12 mit einer Extruder-Steuereinrichtung 14 in Verbindung, die wiederum über eine Signalleitung 15 mit dem Extruder 4 verbunden ist.

Zur Verständniserleichterung ist in den Fig. 1 und 2 ein kartesisches xyz-Koordinatensystem eingezeichnet. In der Fig. 1 verläuft die x-Richtung nach rechts, die y-Richtung senkrecht in die Zeichenebene hinein und die z-Richtung nach oben. Entsprechendes gilt für die Fig. 2.

Über eine in der Fig. 1 angedeutete mechanische Verbindung 16 steht die Lasermarkiervorrichtung 7 mit einer Mitführeinrichtung 17 in Verbindung. Bei der mechanischen Verbindung 16 handelt es sich um eine Linearführung. Mit der Mitführeinrichtung 17 ist eine Verlagerung der Lasermarkiervorrichtung 7 längs der x-Richtung möglich, wie durch einen Doppelpfeil 18 angedeutet.

Über eine weitere Signalleitung 19 steht die Markiersteuereinrichtung 12 mit einer Erfassungseinrichtung 20 in Signalverbindung. Letztere weist eine Zeilenkamera 20a auf, deren Zeile sich parallel zur y-Richtung erstreckt und die einen Ausschnitt der zu markierenden Gegenstandsoberfläche 8 erfasst. Alternativ zur Zeilenkamera 20a kann auch eine Digitalkamera, eine Flächenkamera oder ein anderer Typ eines Sensors eingesetzt sein.

Details der Lasermarkiervorrichtung 7 zeigt Fig. 2. Als Laserstrahlquelle 21 dient ein Nd:YAG-Laser. Es handelt sich um einen gepulsten Laser mit einer Pulsfrequenz von 20 kHz. Die Laserwellenlänge beträgt 1064 nm. Der Laser hat eine mittlere Leistung von 50 W. Die einzelnen Laserpulse haben eine Pulsdauer von ca. 130 ns. Die Einzelimpulsenergie beträgt etwa 2,1 mJ. Alternativ kann der Laser auch mit einer Pulsfrequenz von 10 kHz betrieben werden. Die Einzelimpulse haben dann eine Dauer von ca. 100 ns und eine Energie von etwa 4mJ. Der Resonator der Laserstrahlquelle 21 hat einen in der Fig. 2 oben dargestellten hochreflektierenden ersten Resonatorspiegel 22 und, das andere Ende des Resonators bildend, einen teilreflektierenden zweiten Resonatorspiegel 23.

Zwischen den Resonatorspiegeln 22, 23 ist ein Nd:YAG-Lasermedium 24 angeordnet. Zwischen dem Lasermedium 24 und dem ersten Resonatorspiegel 22 ist noch ein Pulsmodulator 25 angedeutet.

Die von der Laserstrahlquelle 21 erzeugte Laserstrahlung 10 passiert nach dem Austreten aus dem Resonator zunächst eine Ablenkeinrichtung 26. Mit Hilfe von dieser kann die Laserstrahlung 10 in zwei zueinander senkrechten Ablenkrichtungen, nämlich in x- und y-Richtung, die senkrecht auf der Strahlrichtung der Laserstrahlung 10 liegen, abgelenkt werden.

Die Vorschubgeschwindigkeit des Gegenstands 2, also des Extrudats, in x-Richtung beträgt einige m/min.

Die Ablenkeinrichtung 26 hat zwei in der Fig. 2 schematisch dargestellte Ablenkspiegel 27, 28, die als um zueinander senkrechte Achsen galvanisch verkippbare Spiegel gebildet sind. Der erste Ablenkspiegel 27 dient beispielsweise der x-Ablenkung und der zweite Ablenkspiegel 28 der y-Ablenkung der Laserstrahlung 10.

Nach Durchtreten der Ablenkeinrichtung 26 durchtritt die Laserstrahlung 10 eine Bündelformungseinrichtung 29, z. B. eine Plankonvexlinse.

Die Lasermarkiervorrichtung 7 ist mit Hilfe eines nicht dargestellten Antriebs translatorisch in x-, y- und z-Richtung verlagerbar, wobei bei rotationssymmetrischen Bauteilen eine Verlagerung vorteilhafterweise in polaren Koordinaten erfolgt. Über eine gestrichelt angedeutete Signalleitung 30 steht die Lasermarkiervorrichtung 7 mit einer Fokalpositions-Regeleinrichtung 31 in Signalverbindung. Die Fokalpositions-Regeleinrichtung 31 wiederum steht über eine Signalleitung 32 mit der Markiersteuereinrichtung 12 und die Markiersteuereinrichtung 12 steht über eine Signalleitung 33 mit der Ablenkeinrichtung 26 und über eine Signalleitung 34 mit der Laserstrahlquelle 21 in Signalverbindung. Die Signalleitungen 32 bis 34 sind Teilleitungen der Signalleitung 11.

Die oben schon erwähnte Beschichtungseinrichtung 6 dient zum Aufbringen der für die Laserstrahlung 10 farbumschlagssensitiven Beschichtung 5 auf der zu markierenden Gegenstandsoberfläche 8. Dies ist am Beispiel eines Gasrohrs als Gegenstand 2 beschrieben, welches in der Fig. 3 im Querschnitt dargestellt ist.

Die Beschichtungseinrichtung 6 erzeugt mittels Koextrusion insgesamt fünf Längsstreifen 35, die zusammen die Beschichtung 5 ergeben. Die Längsstreifen 35 sind am äußeren Umfang des Gasrohrs 2 anextrudiert und liegen in Umfangsrichtung gleich verteilt vor, sind also um jeweils 72° zueinander versetzt. Die einzelnen Längsstreifen 35 sind in ihrer Dicke in der Fig. 3 stark übertrieben dargestellt. Tatsächlich hat jeder Längsstreifen 35 eine Schichtdicke von etwa 0,15 mm. Die Längsstreifen 35 sind ebenfalls aus einem PE-haltigen Grundmaterial, welches im Unterschied zum sonstigen Gasrohr 2 TiO₂-haltig ist. Die Breite jedes Längsstreifens 35 ist mindestens so groß wie die Breite des Markierfelds 9.

Nachfolgend wird ein Verfahren zum Herstellen des die Informationsmarkierung 3 aufweisenden Gegenstands 2 beschrieben: Zunächst wird mit dem Extruder 4 der Gegenstand 2 mit dem Querschnitt nach Fig. 3 extrudiert. Die Erfassungseinrichtung 20 erfasst dann mit der Zeilenkamera 20a die Lage des der Lasermarkiervorrichtung 7 nächst zugewandten Längsstreifens 35. Hierzu erfasst die Zeilenkamera 20a die Grenzbereiche zwischen dem im Erfassungsbereich vorliegenden Längsstreifen 35 und dem diesen umgebenden sonstigen Gegenstand 2. Dieser Farbunterschied ergibt sich dadurch, dass die Längsstreifen 35 z. B. etwas heller ausgeführt sind als das sonstige Gasrohr 2. In der Fig. 3 ist im Querschnitt des Gasrohrs 2 ganz oben der Längsstreifen 35 durchgezogen in der Idealposition zum Markieren dargestellt. In Umfangsrichtung um 36° im Uhrzeigersinn versetzt gestrichelt ist eine alternative Lage des Längsstreifens 35 dargestellt. Die Erfassungseinrichtung 20 erfasst die y-Abweichung Δy des Längsstreifens 35, mit der eine z-Abweichung ΔF einhergeht. Beide Werte Δy und ΔF gibt die Erfassungseinrichtung 20 an die Markiersteuereinrichtung 12 weiter. Entsprechend der y-Abweichung wird die Ablenkeinrichtung 26 und/oder die Lasermarkiervorrichtung 7 voreingestellt, so dass die Laserstrahlung 10 auf den Längsstreifen 35 in der von der Erfassungseinrichtung 20 erfassten Position trifft. Auch die Lage der durch die Bündelformungseinrichtung 29 erzeugten Fokalebene wird, insbesondere durch z-Verlagerung der Lasermarkiervorrichtung 7 entsprechend dem Wert ΔF eingestellt. Eine weitere ΔF-Korrektur kann sich z. B. durch eine Ovalität der Querschnittsgeometrie des Gasrohrs 2 ergeben. Die ΔF-Korrektur wird durchgeführt, indem die Markiersteuereinrichtung 12 entsprechend die Fokalpositions-Regeleinrichtung 31 mit Informationen versorgt.

Nach der Lageerfassung des Längsstrahls 35 und einer entsprechenden Kalibrierung der Lasermarkiervorrichtung 7 wird auf den Längsstreifen 35 die Informationsmarkierung 3 aufgebracht.

Hierzu rastert die Laserstrahlung 10 das Markierfeld 9 mit einer voreingestellten Rasterbreite sowie mit einem voreingestellten Rasterabstand ab. Die Rasterbreite kann z. B. der Breite des Längsstreifens 35 entsprechen. Der Rasterabstand, also der Abstand zweier Zeilen des Rasters sowie der Abstand zweier Punkte innerhalb einer Rasterzeile beträgt 0,1 bis 0,2 mm. Auch kleine Zeilenabstände, z. B. 80 µm, sind möglich. Auch kleine Punktabstände innerhalb einer Zeile, z. B. 20 µm, sind möglich. Die Laserstrahlung 10 wird auf dem Gegenstand 2 mit einer Ablenkgeschwindigkeit von 2.600 mm/sec mittels der Ablenkeinrichtung 26 abgelenkt. Beim Auftreffen der Laserstrahlung 10 auf den TiO₂-dotierten Längsstreifen 35 erfolgt ein Farbumschlag, z. B. eine Schwärzung des Materials des Längsstreifens 35 dort, wo die Laserstrahlung aufgetroffen ist. Auf diese Weise entsteht die Markierung 3, z. B. ein Barcode, mit hohem Kontrast. Der x-Vorschub geschieht beim Markieren durch eine Überlagerung des Extrusionsvorschubs mit dem x-Vorschub der Lasermarkiervorrichtung 7. Letztere kann erzeugt werden durch einen x-Vorschub der Ablenkeinrichtung 26 und/oder durch Mitführen der Lasermarkiervorrichtung 7 mit dem Gegenstand 2 mit Hilfe der Mitführeinrichtung 17.

Prinzipiell ist es auch möglich, den Gegenstand 2 mit der Informationsmarkierung 3 zu versehen, ohne die Beschichtung 5 vorzusehen. Dies erhöht die Anforderungen, die an die Lasermarkiervorrichtung 7 gestellt werden. Soweit keine Beschichtung 5 erforderlich ist, entfällt bei der Vorrichtung 1 die Erfassungseinrichtung 20 und entsprechend entfällt eine Kalibrierung der Lasermarkiervorrichtung 7, was die Werte Δy und ΔF angeht. Allenfalls eine Unebenheit der Gegenstandsoberfläche 8, die z. B. durch eine Ovalität eines rohrförmigen Rohres oder aber auch durch andere Unebenheiten einer Gegenstandsoberfläche hervorgerufen werden kann, kann eine ΔF-Korrektur noch erfordern.

Eine der Erfassungseinrichtung 20 vergleichbare Einrichtung 20' kann die Qualität der aufgebrachten Informationsmarkierung 3 durch optisches Abtasten von dieser überwachen. Eine derartige Einrichtung 20' ist in der Fig. 1 gestrichelt über dem Gegenstand 2, welches die Lasermarkiervorrichtung 7 bereits passiert hat, angeordnet. Neben der Überwachung kann die Einrichtung 20' auch der Qualitätskontrolle sowie der Steuerung bzw. Regelung der Lasermarkiervorrichtung 7 dienen.

Auch andere Lasermarkiervorrichtungen 7 können zum Einsatz kommen, z. B. ein Faserlaser mit einer Leistung > 10 W, vorzugsweise > 50 W.

Anstelle von TiO₂ können auch andere laseraktive Pigmente zudotiert werden. Die Beschichtung 5 kann eingefärbt sein und insbesondere eine ähnliche Farbe aufweisen wie die sonstige Gegenstandsfarbe.

Anstelle durch Koextrusion kann die Beschichtung 5 auch durch Aufdrucken, durch Aufkleben, z. B. in Form einer Folie, oder durch Aufschweißen erfolgen. Es ist auch möglich, die zu markierende Gegenstandsoberfläche 8 vollständig mit der Beschichtung 5 zu versehen. Dies kann z. B. in Form einer Vakuumummantelung geschehen. Hierzu wird die z. B. in Form eines Schlauchs vorliegende Beschichtung durch Vakuum auf den Gegenstand 2 aufgezogen.

Mit dieser Vorrichtung ist es auch möglich die Informationsmarkierung 3 durch Abtragen von Teilbereichen der Beschichtung 5 des Gegenstands 2 herzustellen. Diese Ausführung ist besonders vorteilhaft, wenn der Kontrast zwischen Gegenstand 2 und Beschichtung 5 für eine Lesbarkeit ausreicht.

Das PE-Material ist für die Laserstrahlung 10 hochtransparent, so dass mehr als 90% der Laserstrahlung 10 nicht vom Gegenstandsmaterial absorbiert werden. Somit wird eine Selbstbegrenzung der Lasereffekte auf die Dicke der Beschichtung 5 erreicht. Im Falle des die Beschichtung 5 aufweisenden Gegenstands 2 sorgt die Pigmentdotierung für den Markierkontrast. Bei unbeschichteten Gegenständen 2 genügt die Rest-Wechselwirkung des Gegenstandsmaterials mit der hochintensiven Laserstrahlung 10, um einen ausreichenden Markierkontrast zu erzeugen.

## Patentansprüche

1. Verfahren zur Herstellung eines Polyethylen-(PE)-Gegenstands (2) mit einer maschinenlesbar codierten Informationsmarkierung (3) mit folgenden Verfahrensschritten:
- Extrudieren des Gegenstands (2),
- Aufbringen der Markierung (3) durch Beaufschlagen eines Markierfeldes (9) auf der zu markierenden Gegenstandsoberfläche (8) mit gebündelter Laserstrahlung (10) einer Laserstrahlquelle (21) hoher Leistung und einer Wellenlänge, für die der Gegenstand eine hohe Transparenz hat,
- wobei ein Markiervorschub längs des Gegenstands (2) zumindest teilweise durch einen Extrusionsvorschub erfolgt.

2. Verfahren nach Anspruch 1, **gekennzeichnet durch** ein Ablenken der Laserstrahlung (10) zum Führen innerhalb des Markierfeldes (9) auf der Gegenstandsoberfläche (8) während des Markierens, wobei ein Ablenkvorschub längs des Gegenstands (2) dem Extrusionsvorschub überlagert wird.

3. Verfahren nach Anspruch 2, **dadurch gekennzeichnet, dass** die Vorschubüberlagerung durch Verlagern mindestens eines Ablenkspiegels (27, 28) für die Laserstrahlung (10) erfolgt.

4. Verfahren nach Anspruch 2 oder 3, **dadurch gekennzeichnet, dass** die Vorschubüberlagerung durch Verlagern der Lasermarkiervorrichtung (7) erfolgt.

5. Verfahren nach einem der Ansprüche 1 bis 4, **gekennzeichnet durch** ein Aufbringen einer für die Laserstrahlung (10) farbumschlagssensitiven, insbesondere pigmenthaltigen, vorzugsweise TiO₂-haltigen, Beschichtung (5) auf der zu markierenden Gegenstandsoberfläche (8).

6. Verfahren nach Anspruch 5, **dadurch gekennzeichnet, dass** die Beschichtung (5) in Form mindestens eines Längsstreifens (35) auf die zu markierende Gegenstandsoberfläche (8) aufgebracht wird, dessen Breite mindestens so groß ist wie die Breite des Markierfeldes (9).

7. Verfahren nach Anspruch 6 zum Aufbringen der Informationsmarkierung (3) auf ein Rohr als Gegenstand (2), **dadurch gekennzeichnet, dass** die Umfangsposition des mindestens einen Längsstreifens (35) sensorisch erfasst wird und anhand der Informationen der sensorischen Erfassung ein Nachführen der Laserstrahlung (10) erfolgt.

8. Verfahren nach einem der Ansprüche 1 bis 7, **dadurch gekennzeichnet, dass** abhängig vom Abstand der Laserstrahlquelle (21) zum Markierfeld (9) und/oder abhängig von der Umfangs-Nachführung der Laserstrahlung (10) die Lage der Fokalebene der Laserstrahlung (10) relativ zur Lage des Markierfeldes (9) nachgestellt wird.

9. Vorrichtung (1) zur Herstellung eines Polyethylen-(PE)-Gegenstands (2) mit einer maschinenlesbar codierten-Informationsmarkierung (3) mit
- einem Extruder (4) zum Extrudieren des Gegenstands (2),
- einer Laserstrahlquelle (21) zum Aufbringen der Markierung (3) durch Beaufschlagen eines Markierfeldes (9) auf der zu markierenden Gegenstandsoberfläche (8) mit gebündelter Laserstrahlung (10) hoher Leistung und einer Wellenlänge, für die der Gegenstand (2) eine hohe Transparenz hat,
- wobei eine Markiersteuereinrichtung (12) mit einer Extruder-Steuereinrichtung (14) derart zusammenwirkt, dass ein Markiervorschub längs des Gegenstands (2) zumindest teilweise durch einen Extrusionsvorschub erfolgt.

10. Vorrichtung nach Anspruch 9, **gekennzeichnet durch** eine Ablenkeinrichtung (26; 29) zum Ablenken der Laserstrahlung (10) zum Führen innerhalb des Markierfeldes (9) auf der Gegenstandsoberfläche (8) während des Markierens, wobei ein Ablenkvorschub längs des Gegenstands (2) dem Extrusionsvorschub überlagert wird.

11. Vorrichtung nach Anspruch 10, **gekennzeichnet durch** mindestens einen gesteuert verlagerbaren Ablenkspiegel (27, 28) für die Laserstrahlung (10) als Teil der Ablenkeinrichtung (26, 29).

12. Vorrichtung nach einem der Ansprüche 9 bis 11, **gekennzeichnet durch** eine Mitführeinrichtung (17) zum Mitführen der Lasermarkiervorrichtung (7) mit dem Gegenstand (2).

13. Vorrichtung nach einem der Ansprüche 9 bis 12, **gekennzeichnet durch** eine Beschichtungseinrichtung (6) zum Aufbringen einer für die Laserstrahlung (10) farbumschlagssensitiven Beschichtung (5) auf der zu markierenden Gegenstandsoberfläche (8), insbesondere in Form mindestens eines Längsstreifens (35), dessen Breite mindestens so groß ist wie die Breite des Markierfeldes (9).

14. Vorrichtung nach einem der Ansprüche 9 bis 13, **dadurch gekennzeichnet, dass** der Extruder (4) zum Extrudieren eines Rohrs als Gegenstand (2) und die Beschichtungseinrichtung (6) zum Aufbringen der Längsstreifen (35) ausgebildet sind, wobei eine Erfassungseinrichtung (20) vorgesehen ist, die die Umfangsposition des mindestens einen Längsstreifens (35) sensorisch erfasst und derart ausgebildet ist, dass sie diese Information an die Markiersteuereinrichtung (12) zum Nachführen der Laserstrahlung (10) weitergibt.

15. Vorrichtung nach Anspruch 14, **dadurch gekennzeichnet, dass** die Erfassungseinrichtung (20) eine Zeilenkamera (20a) aufweist.

16. Vorrichtung nach einem der Ansprüche 9 bis 15, **gekennzeichnet durch** eine Fokalpositions-Regeleinrichtung (31), welche abhängig vom Abstand der Laserstrahlquelle (21) zum Markierfeld (9) und/oder abhängig von der Umfangs-Nachführung der Laserstrahlung (10) die Lage einer Fokalebene der Laserstrahlung (10) relativ zur Lage des Markierfeldes (9) nachfährt.

## Claims

1. Method for manufacturing a polyethylene (PE) object (2) with a machine-readably encoded information marking (3) comprising the following method steps:
- extruding the object (2),
- applying the marking (3) by impinging a marking zone (9) on the object surface (8) to be marked with concentrated laser radiation (10) of a laser radiation source (21) of high power and a wavelength for which the object has a high transparency,
- a marking advancement along the object (2) taking place at least partially by means of an extruding advancement.

2. Method according to Claim 1, **characterized by** a diversion of the laser radiation (10) for providing guidance within the marking zone (9) on the object surface (8) during the marking, a deflecting advancement along the object (2) being superimposed on the extruding advancement.

3. Method according to Claim 2, **characterized in that** the superimposing of the advancement takes place by displacing at least one deflecting mirror (27, 28) for the laser radiation (10).

4. Method according to Claim 2 or 3, **characterized in that** the superimposing of the advancement takes place by displacing the laser marking device (7).

5. Method according to one of Claims 1 to 4, **characterized by** applying on the object surface (8) to be marked a coating (5) that is sensitive to the laser radiation (10) in terms of changing colour, in particular containing pigment, preferably containing TiO₂.

6. Method according to Claim 5, **characterized in that** the coating (5) is applied to the object surface (8) to be marked in the form of at least one longitudinal strip (35), the width of which is at least as great as the width of the marking zone (9).

7. Method according to Claim 6 for applying the information marking (3) to a pipe as an object (2), **characterized in that** the circumferential position of the at least one longitudinal strip (35) is detected by sensor(s) and an adjustment of the laser radiation (10) takes place on the basis of the information from the detection by the sensor(s).

8. Method according to one of Claims 1 to 7, **characterized in that**, depending on the distance of the laser radiation source (21) from the marking zone (9) and/or depending on the circumferential adjustment of the laser radiation (10), the position of the focal plane of the laser radiation (10) in relation to the position of the marking zone (9) is corrected.

9. Apparatus (1) for manufacturing a polyethylene (PE) object (2) with a machine-readably encoded information marking (3) comprising
- an extruder (4) for extruding the object (2),
- a laser radiation source (21) for applying the marking (3) by impinging a marking zone (9) on the object surface (8) to be marked with concentrated laser radiation (10) of high power and a wavelength for which the object (2) has a high transparency,
- a marking controlling device (12) interacting with an extruder controlling device (14) in such a way that a marking advancement along the object (2) takes place at least partially by means of an extruding advancement.

10. Apparatus according to Claim 9, **characterized by** a deflecting device (26; 29) for deflecting the laser radiation (10) for providing guidance within the marking zone (9) on the object surface (8) during the marking, a deflecting advancement along the object (2) being superimposed on the extruding advancement.

11. Apparatus according to Claim 10, **characterized by** at least one deflecting mirror (27, 28) that can be displaced in a controlled manner for the laser radiation (10) as part of the deflecting device (26, 29).

12. Apparatus according to one of Claims 9 to 11, **characterized by** a carrying-along device (17) for carrying the laser marking device (7) along with the object (2).

13. Apparatus according to one of Claims 9 to 12, **characterized by** a coating device (6) for applying on the object surface (8) to be marked a coating (5) that is sensitive to the laser radiation (10) in terms of changing colour, in particular in the form of at least one longitudinal strip (35), the width of which is at least as great as the width of the marking zone (9).

14. Apparatus according to one of Claims 9 to 13, **characterized in that** the extruder (4) is designed for extruding a pipe as the object (2) and the coating device (6) is designed for applying the longitudinal strips (35), a detecting device (20) being provided, detecting the circumferential position of the at least one longitudinal strip (35) by sensor(s) and designed in such a way that it passes on this information to the marking controlling device (12) for adjusting the laser radiation (10).

15. Apparatus according to Claim 14, **characterized in that** the detecting device (20) has a line-scan camera (20a).

16. Apparatus according to one of Claims 9 to 15, **characterized by** a focal-position controlling device (31), which, depending on the distance of the laser radiation source (21) from the marking zone (9) and/or depending on the circumferential adjustment of the laser radiation (10), corrects the position of a focal plane of the laser radiation (10) in relation to the position of the marking zone (9).

## Revendications

1. Procédé de fabrication d'un objet (2) en polyéthylène (PE) sur lequel est apportée une inscription d'information (3) codée de manière à pouvoir être lue par machine, le procédé présentant les étapes suivantes :
- extrusion de l'objet (2),
- application de l'inscription (3) en projetant sur un champ d'inscription (9) de la surface (8) de l'objet qui doit être inscrit un faisceau laser (10) concentré provenant d'une source (21) de rayonnement laser à haute puissance et d'une longueur d'onde pour laquelle l'objet présente une haute transparence,
- l'avancement d'inscription le long de l'objet (2) résultant au moins en partie de l'avancement d'extrusion.

2. Procédé selon la revendication 1, **caractérisé par** la déviation du rayonnement laser (10) pour le guider à l'intérieur du champ d'inscription (9) de la surface (8) de l'objet pendant l'inscription, l'avancement de déviation le long de l'objet (2) étant superposé à l'avancement d'extrusion.

3. Procédé selon la revendication 2, **caractérisé en ce que** la superposition d'avancement s'effectue par déplacement d'au moins un miroir (27, 28) qui dévie faisceau laser (10).

4. Procédé selon les revendications 2 ou 3, **caractérisé en ce que** la superposition d'avancement s'effectue par déplacement du dispositif (7) d'inscription au laser.

5. Procédé selon l'une des revendications 1 à 4, **caractérisé par** l'application d'un revêtement (5) sensible aux changements de teinte du rayonnement laser (10) en particulier contenant un pigment et de préférence du TiO₂ sur la surface (8) de l'objet à inscrire.

6. Procédé selon la revendication 5, **caractérisé en ce que** le revêtement (5) est appliqué sur la surface (8) de l'objet à inscrire sous la forme d'au moins un ruban allongé (35) dont la largeur est au moins aussi grande que la largeur du champ d'inscription (9).

7. Procédé selon la revendication 6, pour appliquer une inscription d'information (3) sur un tube formant l'objet (2), **caractérisé en ce que** la position initiale du ou des rubans allongés (35) est détectée par des capteurs, le guidage du faisceau laser (10) s'effectuant à l'aide des informations fournies par les capteurs de saisie.

8. Procédé selon l'une des revendications 1 à 7, **caractérisé en ce que** la position du plan focal du rayonnement laser (10) est ajustée par rapport à la position du champ d'inscription (9) en fonction de la distance entre la source (21) du faisceau laser et le champ d'inscription (9) et/ou en fonction du guidage périphérique du faisceau laser (10).

9. Dispositif (1) de fabrication d'un objet (2) en polyéthylène (PE) sur lequel est apportée une inscription d'information (3) codée de manière à pouvoir être lue par machine, le dispositif présentant :
- une extrudeuse (4) qui extrude l'objet (2),
- une source (21) de faisceau laser qui applique l'inscription (3) en projetant sur un champ d'inscription (9) de la surface (8) de l'objet à inscrire un faisceau laser concentré (10) de haute puissance et d'une longueur d'onde pour laquelle l'objet (2) présente une haute transparence et
- un dispositif (12) de commande d'inscription coopérant avec un dispositif (14) de commande de l'extrudeuse de telle sorte que l'avancement de l'inscription le long de l'objet (2) résulte au moins en partie de l'avancement d'extrusion.

10. Dispositif selon la revendication 9, **caractérisé par** un dispositif de déviation (26; 29) qui dévie le faisceau laser (10) pour le guider à l'intérieur du champ d'inscription (9) de la surface (8) de l'objet pendant l'inscription, un avancement de déviation le long de l'objet (2) étant superposé à l'avancement d'extrusion.

11. Dispositif selon la revendication 10, **caractérisé par** au moins un miroir (27, 28) qui dévie le faisceau laser (10) et apte à être déplacé de manière contrôlée, le miroir faisant partie du dispositif de déviation (26, 29).

12. Dispositif selon l'une des revendications 9 à 11, **caractérisé par** un dispositif (17) de guidage conjoint qui guide le dispositif (7) d'inscription au laser conjointement avec l'objet (2).

13. Dispositif selon l'une des revendications 9 à 12, **caractérisé par** un dispositif d'application (6) qui applique sur la surface (8) de l'objet à inscrire un revêtement (5) sensible aux changements de teinte du faisceau laser (10) et qui présente en particulier la forme d'au moins un ruban allongé (35) dont la largeur est au moins aussi grande que la largeur du champ d'inscription (9).

14. Dispositif selon l'une des revendications 9 à 13, **caractérisé en ce que** l'extrudeuse (4) est configurée pour extruder un tube formant l'objet (2) et le dispositif d'application (6) est configuré pour appliquer les rubans allongés (35), un dispositif de saisie (20) qui saisit par capteurs la position périphérique du ou des rubans allongés (35) est configuré de manière à transmettre cette information au dispositif (12) de commande d'inscription pour guider le faisceau laser (10) étant prévu.

15. Dispositif selon la revendication 14, **caractérisé en ce que** le dispositif de saisie (20) présente une caméra (20a) à lignes.

16. Dispositif selon l'une des revendications 9 à 15, **caractérisé par** un dispositif (31) de régulation de la position du foyer qui suit la position du plan focal du faisceau laser (10) par rapport à la position du champ d'inscription (9) en fonction de la distance entre la source (21) de faisceau laser et le champ d'inscription (9) et/ou en fonction du guidage périphérique du faisceau laser (10).
